# EUROPEAN PATENT SPECIFICATION

(11) **EP 1 798 252 B1**
(45) Date of publication and mention of the grant of the patent: **21.10.2009**
(21) Application number: 05782100.1
(22) Date of filing: 09.09.2005
(51) Int. Cl.: C08J 3/24, C08L 27/12

(54) **CROSSLINKED FLUOROCOPOLYMER MOLDINGS**
VERNETZTE FLUOROCOPOLYMERFORMEN
MOULAGES EN FLUOROCOPOLYMÈRE RÉTICULÉ

(30) Priority: 04.10.2004 JP 2004291031
(43) Date of publication of application: 20.06.2007
(73) Proprietor: Unimatec Co., Ltd., Tokyo 105-8585 (JP)
(72) Inventor: KANEGA, Jun, c/o UNIMATEC CO., LTD., Kitaibaraki-shi, Ibaraki 319-1544 (JP); OBARA, Takashi, c/o UNIMATEC CO., LTD., Kitaibaraki-shi, Ibaraki 319-1544 (JP); ENOKIDA, Takashi, c/o UNIMATEC CO., LTD., Kitaibaraki-shi, Ibaraki 319-1544 (JP)
(74) Representative: Albrecht, Thomas
(86) International application number: PCT/JP2005/016587
(87) International publication number: WO 2006/038424

(56) References cited:
- EP-A1- 0 885 928
- EP-A1- 1 285 688
- WO-A-02/098657
- JP-A- 2002 097 329
- US-B1- 6 391 509

## Description

### TECHNICAL FIELD

The present invention relates to the use of a peroxide cross-linking product of a fluorine-containing copolymer blend comprising a fluorine-containing elastomer copolymer, and a fluorine-containing resin copolymer in a plasma irradiation step.

### BACKGROUND ART

The semiconductor production process or the liquid crystal production process involves a plasma treatment of silicon wafers in various steps such as a CVD production step, an etching step, ashing step, etc., but the plasma treatment involves very severe conditions for organic polymer materials, almost all of which are actually inevitable from occurrence of considerable deterioration owing to the plasma irradiation circumstance.

Particularly, sealing materials used in the semiconductor production apparatuses or the liquid crystal production apparatuses undergo deterioration due to the plasma irradiation, and particles of inorganic compounds, etc. contained in the sealing materials as a filler are generated therefrom and are to foul up the wafer surfaces. Thus, it has been as far required that even the sealing materials for use in the semiconductor and liquid crystal production apparatuses may not generate any denaturated materials from the inorganic compounds, etc. used as a filler leading to defective products.

The fluorine-containing elastomers so far used as a sealing material must contain a reinforcing filler such as carbon black, silica, titanium oxide, etc. to improve normal state physical properties such as mechanical strength, etc. and also compression set value, and also in the case of polyol vulcanization or amine vulcanization it is necessary to add an acid acceptor including such metals as Mg, Pb, Ca, Al, Zn, etc. as a vulcanization promoter to the fluorine-containing elastomers besides the vulcanizing agent.

These inorganic fillers can be a cause for generating particles and a fluorine-containing elastomer free from any inorganic filler is also presumable for the reduction of particle generation, but in that case there will arise such new problems as a difficulty not only in attaining the necessary normal state physical properties or compression set value for the sealing materials, but also in lowering the kneadability at the mixing.

Thus, it has been keenly desired to provide a fluorine-containing molding material capable of attaining desired normal state physical properties and compression set value for the sealing material and also attaining distinguished kneadability at the mixing, while reducing the particle generation rate. In case of without any inorganic fillers, deteriorated sealing materials themselves also may be a cause for generating particles, and therefore it has been desired that even the organic polymer materials themselves used as molding materials for the sealing material have a reduced particle generation quantity., in other words, an increased plasma resistance.

When also used as rollers for conveyance in the semiconductor or liquid crystal production apparatuses, the organic polymer materials have such a problem as particle generation by friction, which is a pollution source.
WO 02/098657 relates to polymeric multilayer articles such as films, sheets, pipes, tubing, hollow bodies, and the like that utilize a thermoplastic polymer as one of the layers in the multilayer article. The layers comprise a thermoplastic polymer layer which is a fluoropolymer which is crosslinkable (cf. claims 1 and 3). Further, the reference also proposes blends of thermoplastic fluoropolymers for the thermoplastic polymer layer.
EP 1 285 688 Al relates to a process for impregnating a porous polymer support with an ionomeric fluorinated polymer to obtain transparent thin membranes, occluded to the gas flow, usable in fuel cells and in electrochemical processes; or in applications such for example chemical or physical type separations.
EP 0 885 928 Al relates to fluorinated thermoplastic elastomers having improved sealing properties, in particular at high temperatures, at least up to 150°C (cf. page 2, lines 3/4).
US 6,391,509 B1 relates to a carrier containing a core, a polymer coating or mixtures of polymers thereover, and wherein the coating polymer or mixtures contains a conductive polymer (cf. the abstract) used in developer compositions for the development of images in electrostatographic, especially xerographic imaging systems, printing processes and digital systems (cf. column 1, lines 33 to 49).
According to JP 2002 097329 A, a fluorine-containing copolymer composition consisting of a fluorine containing elastomer and a fluorine resin, each having a reactive point reactive with the common cross-linking agent, is provided, which is capable of giving a cross-linked molding excellent in mechanical characteristics, especially in compression set values (cf. abstract). According to [0006] of the description, the purpose of the invention is to impart excellent mechanical property, especially compression set strength to compositions optionally containing organic bulk agents used as a reinforcing agent.

### DISCLOSURE OF THE INVENTION

### PROBLEM TO BE SOLVED BY THE INVENTION

An object of the present invention is to provide a cross-linked fluorine-containing copolymer moldings having desired normal state physical properties and compression set value while reducing a particle generation quantity of the fluorine-containing copolymers themselves even if used in a plasma irradiation step.

### MEANS FOR SOLVING THE PLOBLEM

The object of the present invention can be attained by the use of a peroxide cross-linking product of a fluorine-containing copolymer blend comprising a fluorine-containing elastomer copolymer, and a fluorine-containing resin copolymer, which is a vinylidene fluoride-tetrafluoroethylene copolymer, wherein the fluorine-containing elastomer copolymer is a vinylidene fluoride-tetrafluoroethylene-perfluoro(lower-alkyl) vinyl ether) terpolymer, wherein the fluorine-containing resin compolymer has a crystal melting point of 100°C or higher, wherein the fluorine-containing elastomer copolymer and the vinylidene fluoride-tetrafluoroethylene copolymer, each have iodine groups and/or bromine groups as reaction sites capable of reacting with a peroxide-based cross-linking agent, respectively, wherein the fluorine-containing copolymer blend comprises 95-55% by weight of the fluorine-containing elastomer copolymer and 5-45% by weight of the fluorine-containing resin copolymer in a plasma irradiation step.

### EFFECT OF THE INVENTION

The cross-linked fluorine-containing copolymer moldings obtained from the above peroxide cross-linking product of a fluorine-containing copolymer blend can maintain desired normal state physical properties and compression set value, when the moldings are used as a sealing material and are subjected to plasma irradiation treatment, and can reduce the particle generation quantity of the cross-linked fluorine-containing copolymer moldings even if the moldings itself are subjected to plasma irradiation treatment or even if the moldings are used as a sealing material or rolls for conveyance in the semiconductor or liquid crystal production apparatuses, where other parts are subjected to the plasma irradiation treatment in these production processes, and consequently the sealing material or rolls for conveyance are also inevitably subjected to the plasma irradiation treatment, the reduction in the particle generation quantity can be given in terms of reduction in percent weight change or percent volume change. The moldings can also effectively reduce a particle generation quantity by friction at the time of plasma irradiation treatment when used as rollers for conveyance in the semiconductor or liquid crystal production apparatuses.

### BEST MODES FOR CARRYING OUT THE INVENTION

The cross-linked fluorine-containing copolymer molded as a peroxide cross-linking product of a blend of fluorine-containing resin copolymers comprising a fluorine-containing elastomer copolymer and a fluorine-containing resin copolymer, which is a vinylidene fluorine-tetrafluoroethylene copolymer, both of the copolymers having reaction sites capable of reacting with a common peroxide-based cross-linking agent, respectively, is disclosed in the following Patent Literature 1 proposed by the present Applicant.
Patent Literature 1 : JP-A-2002-97329

The fluorine-containing elastomer copolymer is VdF-TFE-FAVE terpolymer,
where perfluoro(ethyl vinyl ether), perfluoro(propyl vinyl ether), etc. can be used as FAVE, and preferably perfluoro(methyl vinyl ether) (FMVE) can be used. This terpolymer further copolymerized with ethylene, alkyl vinyl ether, or the like can be also used.
VdF-TFE-FAVE terpolymer can show the best compression set characteristic upon blending with the fluorine-containing resin copolymer, and has a terpolymer composition comprising about 10 to about 80% by mole of VdF, about 10 to about 70% by mole of TFE, and about 10 to about 50% by mole of FAVE, and is further copolymerized with about 0.05 to about 5% by mole of an iodine group- and/or bromine group-containing fluorinated monomer, which will be described below.

Reaction sites capable of reacting with a cross-linking agent, which are to be introduced into the fluorine-containing elastomer copolymers, depend on the selected kind of a cross-linking system.
In the present invention a peroxide cross-linking system is used.

In the case of selecting a peroxide cross-linking system, it is necessary that the fluorine-containing elastomer copolymer is combined with functional groups such as iodine groups, bromine groups, peroxy groups, unsaturated groups, etc. as reaction sites capable of reacting with the peroxide cross-linking system. From the viewpoint of easy introduction of functional groups, the iodine groups and/or bromine groups are selected. More preferably, the iodine groups and/or the bromine groups can be derived from unsaturated iodine- and/or bromine-containing compounds, or saturated iodine- and/or bromine-containing compounds.

Introduction of iodine groups and bromine groups can be carried out by the presence of an iodine- and bromine-containing compound represented by the following general formula :

InBrnR

(where R is a fluorohydrocarbon group, a chlorofluorohydrocarbon group, a chlorohydrocarbon group or a hydrocarbon group, each having 1-10 carbon atoms, and n and m each are 1 or 2) in the reaction system for producing a fluorine-containing elastomer copolymer by copolymerization reaction. The iodine- and bromine-containing compound includes saturated or unsaturated aliphatic or aromatic compounds, where preferable n and m each are 1. Unsaturated aliphatic compounds can form iodine- and bromine-containing fluorinated monomers.

Linear iodine-containing bromine compounds include, for example, 1-bromo-2-iodotetrafluoroethane, 1-bromo-3-iodoperfluoropropane, 1-bromo-4-iodoperfluorobutane, 2-bromo-3-iodoperfluorobutane, 1-bromo-2-iodoperfluoro(2-methylpropane), monobromomonoiodoperfluorocyclobutane, monobromomonoiodoperfluoropentane, monobromomonoiodoperfluoro-n-octane, monobromomonoiodoperfluorocyclohexane, 1-bromo-1-iodo-2-chloroperfluoroethane, 1-bromo-2-iodo-2-chloroperfluoroethane, 1-iodo-2-bromo-2-chloroperfluoroethane, 1,1-dibromo-2-iodoperfluoroethane, 1,2-dibromo-2-iodoperfluoroethane, 1,2-diiodo-2-bromoperfluoroethane, 1-bromo-2-iodo-1,2,2-trifluoroethane, 1-iodo-2-bromo-1,2,2-trifluoroethane, 1-bromo-2-iodo-1,1-difluoroethane, 1-iodo-2-bromo-1,1-difluoroethane, 1-bromo-2-iodo-1-fluoroethane, 1-iodo-2-bromo-1-fluoroethane, 1-bromo-2-iodo-1,1,3,3,3-pentafluoropropane, 1-iodo-2-bromo-1,1,3,3,3-pentafluoropropane, 1-bromo-2-iodo-3,3,4,4,4-pentafluorobutane, 1-iodo-2-bromo-3,3,4,4,4-pentafluorobutane, 1,4-dibromo-2-iodoperfluorobutane, 2,4-dibromo-1-iodoperfluorobutane, 1,4-diiodo-2-bromoperfluorobutane, 1,4-dibromo-2-iodo-3,3,4,4-tetrafluorobutane, 1,4-diiodo-2-bromo-3,3,4,4-tetrafluorobutane, 1,1-dibromo-2,4-diiodoperfluorobutane, 1-bromo-2-iodo-1-chloroethane, 1-iodo-2-bromo-1-chloroethane, 1-bromo-2-iodo-2-chloroethane, 1-bromo-2-iodo-1,1-dichloroethane, 1,3-dibromo-2-iodoperfluoropropane, 2,3-dibromo-2-iodoperfluoropropane, 1,3-diiodo-2-bromoperfluoropropane, 1-bromo-2-iodoethane, 1-bromo-2-iodopropane, 1-iodo-2-bromopropane, 1-bromo-2-iodobutane, 1-iodo-2-bromobutane, 1-bromo-2-iodo-2-trifluoromethyl-3,3,3-trifluoropropane, 1-iodo-2-bromo-2-trifluoromethyl-3,3,3-trifluoropropane,1-bromo-2-iodo-2-phenylperfluoroethane, 1-iodo-2-bromo-2-phenylperfluoroethane, 3-bromo-4-iodoperfluorobutene-1, 3-iodo-4-bromoperfluorobutene-1, 1-bromo-4-iodoperfluorobutene-1, 1-iodo-4-bromoperfluorobutene-1, 3-bromo-4-iodo-3,4,4-trifluorobutene-1, 4-bromo-3-iodo-3,4,4-trifluorobutene-1, 3-bromo-4-iodo-1,1,2-trifluorobutene-1, 4-bromo-5-iodoperfluoropentene-1, 4-iodo-5-bromoperfluoropentene-1, 4-bromo-5-iodo-1,1,2-trifluoropentene-1, 4-iodo-5-bromo-1,1,2-trifluoropentene-1, 1-bromo-2-iodoperfluoroethyl perfluoromethyl ether, 1-bromo -2-iodoperfluoroethyl perfluoroethyl ether, 1-bromo-2-iodoperfluoroethyl perfluoropropyl ether, 2-bromo-3-iodoperfluoropropyl perfluorovinyl ether, 1-bromo-2-iodo-perfluoroethyl perfluorovinyl ether, 1-bromo-2-iodoperfluoroethyl perfluoroallyl ether, 1-bromo-2-iodoperfluoroethyl methyl ether, 1-iodo-2-bromoperfluoroethyl ethyl ether, 1-iodo-2-bromoethyl ethyl ether, 1-bromo-2-iodoethyl-2'-chloroethyl ether, etc. These iodine- and bromine-containing compounds can be prepared by any well known appropriate method. For example, a monobromomonoiodo fluorine-containing olefin can be obtained by reaction of an fluorine-containing olefin with iodine bromide.

The aromatic iodine-containing bromine compounds include, for example, benzenes substituted with such substituents as 1-iodo-2-bromo, 1-iodo-3-bromo, 1-iodo-4-bromo, 3,5-dibromo-1-iodo, 3,5-diiodo-1-bromo, 1-(2-iodoethyl)-4-(2-bromoethyl), 1-(2-iodoethyl)-3-(2-bromoethyl), 1-(2-iodoethyl)-4-(2-bromoethyl), 3,5-bis(2-bromoethyl)-1-(2-iodoethyl), 3,5-bis(2-iodoethyl)-1-(2-bromoethyl), 1-(3-iodopropyl)-2-(3-bromopropyl), 1-(3-iodopropyl)-3-(3-bromopropyl), 1-(3-iodopropyl)-4-(3-bromopropyl), 3,5-bis-(3-bromopropyl)-1-(3-iodopropyl), 1-(4-iodobutyl)-3-(4-bromobutyl), 1-(4-iodobutyl)-4-(4-bromobutyl), 3,5-bis(4-iodobutyl)-1-(4-bromobutyl), 1-(2-iodoethyl)-3-(3-bromopropyl), 1-(3-iodopropyl)-3-(4-bromobutyl), 3,5-bis(3-bromopropyl)-1-(2-iodoethyl), 1-iodo-3-(2-bromoethyl), 1-iodo-3-(3-bromopropyl), 1,3-diiodo-5-(2-bromoethyl), 1,3-diiodo-5-(3-bromopropyl), 1-bromo-3-(2-iodoethyl), 1-bromo-3-(3-iodopropyl), 1,3-dibromo-5-(2-iodoethyl), 1,3-dibromo-5-(3-iodopropyl), etc., and perfluorobenzenes substituted with such substituents as 1-iodo-2-bromo, 1-iodo-3-bromo, 1-iodo-4-bromo, 3,5-dibromo-1-iodo, 3,5-diiodo-1-bromo, etc.

Introduction of iodine groups can be carried out in the presence of a saturated or unsaturated iodine-containing compound represented by the following general formula :

RIn

(where R is a fluorohydrocarbon group, a chlorofluorohydrocarbon group, a chlorohydrocarbon group or a hydrocarbon group, each having 1-10 carbon atoms, and n is 1 or 2), in the reaction system for producing a fluorine-containing elastomer copolymer by copolymerization reaction. The unsaturated iodine-containing compound can form an iodine-containing fluorinated monomer.

The saturated iodine-containing compound represented by the foregoing general formula includes, for example, 1,2-diiodoperfluoroethane, 1,3-diiodoperfluoropropane, 1,4-diiodoperfluorobutane, 1,6-diiodoperfluorohexane, 1,8-diiodoperfluorooctane, etc. and preferably 1,4-diiodoperfluorobutane is used. The unsaturated iodine-containing compound includes, for example, iodotrifluoroethylene, 1-iodo-2,2-difluoroethylene, perfluoro(2-iodoethyl vinyl ether), etc.

Introduction of bromine groups can be carried out in the presence of a saturated or unsaturated bromine-containing fluorinated compound in the reaction system for producing a fluorine-containing elastomer copolymer by copolymerization reaction. The bromine-containing fluorinated compound can further contain chlorine atoms in the molecule. The unsaturated bromine-containing compound can form a bromine- containing fluorinated monomer.

The bromine-containing fluorinated compound for use herein includes, for example, saturated aliphatic compounds having 2-10 carbon atoms, such as 1,2-dibromo-1-fluoroethane, 1,2-dibromo-1,1-difluoroethane, 1,2-dibromo-1,1,2-trifluoroethane, 1,2-dibromo-1-chlorotrifluoroethane, 2,3-dibromo-1,1,1-trifluoropropane, 1,2-dibromohexafluoropropane, 1,2-dibromoperfluorobutane, 1,4-dibromoperfluorobutane, 1,4-dibromo-2-chloro-1,1,-2-trifluorobutane, 1,6-dibromoperfluorohexane, etc.; unsaturated aliphatic compounds having 2-10 carbon atoms, such as 2-bromotetrafluoroethoxytrifluoroethylene, 2-bromo-1,1-difluoroethylene, 1,1-dibromodifluoroethylene, bromotrifluoroethylene, 2-bromo-3,3,3-trifluoropropene, 4-bromo-1,1,-2-trifluorobutene-1, 4-bromo-3-chloro-3,4,4-trifluorobutene-1, 4-bromo-3,3,4,4-tetrafluorobutene-1, perfluoro(2-bromoethyl vinyl ether), etc.; or aromatic compounds such as 1,2-dibromo-3,5-difluorobenzene, 1,2-dibromo-4,5-difluorobenzene, 1,4-dibromo-2,5-difluorobenzene, 2,4-dibromo-1-fluorobenzene, 1,3-dibromo-5-fluorobenzene, 1,4-dibromo-2-fluorobenzene, 1,2-dibromoperfluorobenzene, 1,3-dibromoperfluorobenzene, 1,4-dibromoperfluorobenzene, etc.

The iodine group- and/or bromine group-containing compounds can be used alone or in combination thereof, depending on cross-linking conditions for cross-linking molding of a blend of the fluorine-containing elastomer copolymer and the fluorine-containing resin copolymer or on the reactivities of the compounds.

Molecular weight of the fluorine-containing elastomer copolymer for use herein depends on the processability or desired mechanical properties of a blend of fluorine-containing copolymers, but it is desirable that the intrinsic viscosity [η] as an index of molecular weight is about 0.3 to about 1.5dl/g, preferably about 0.4 to about 1.3dl/g.

To obtain a fluorine-containing elastomer copolymer having a molecular weight corresponding to an intrinsic viscosity in the aforementioned range, a chain transfer agent such as ethyl malonate, acetone, isopropanol, etc. can be used at the time of polymerization reaction, if required. In the case of the iodine- and bromine-containing compound, the compound itself has a chain transfer action, and thus addition of a chain transfer agent will be unnecessary except for a special case.

Copolymerization reaction for producing a fluorine-containing elastomer copolymer can be carried out by any polymerization method such as emulsion polymerization, suspension polymerization, solution polymerization, bulk polymerization, etc., but from the viewpoints of production cost, heat and yellowing resistances, normal state physical properties, etc. it is desirable to use the polymerization procedure as disclosed in the following Patent Literatures 2 and 3. Furthermore, from the viewpoints of a higher degree of polymerization and economy, an emulsion polymerization method is preferable. Emulsion polymerization reaction can be carried out under pressure of generally about 0 to about 10MPa · G, preferably about 1 to about 5MPa · G, at a temperature of about 0 to about 100°C, preferably about 20 to about 80°C, in the presence of a catalyst of a water-soluble inorganic peroxide such as ammonium persulfate, etc. or a redox system thereof with a reducing agent such as sodium hydrogen sulfite, etc., using ammonium perfluorooctanoate, ammonium perfluoroheptanoate, ammonium perfluorononanoate, etc., or a mixture thereof, preferably ammonium perfluorooctanoate as an emulsifying agent. In the emulsion polymerization reaction, it is preferable uniformly and portion-wise addition of a monomer mixture of a predetermined composition ratio to the reaction system. To adjust the pH of the reaction system, an electrolyte substance having a buffering action such as Na₂HPO₄, NaH₂PO₄, KH₂PO₄, etc., or sodium hydroxide, an aqueous ammonia solution, etc. can be added thereto.
Patent Literature 2 : JP-A-2003-165802
Patent Literature 3 : JP-A-2004-175855

Fluorine-containing resin copolymer to be blended with the fluorine-containing elastomer copolymer is a VdF-TFE copolymer having reaction sites capable of reacting with a cross-linking agent, which is common to the fluorine-containing elastomer copolymer. The copolymers prepared by copolymerizing about 5 to about 90% by mole, preferably about 10 to about 90% by mole, of TFE and about 0.05 to about 5% by mole, of the aforementioned iodine group- and/or bromine group-containing fluorinated monomer can be used. It is preferable that the fluorine-containing resin copolymer has a melting point (softening point) of 100°C or higher. In the case of using the copolymer having a softening point of lower than 100°C, the improving effect on the normal state physical properties of cross-linked fluorine-containing copolymer moldings is not remarkable and with a poor plasma resistance.

The VdF-TFE copolymer can be further copolymerized with a VdF- and TFE-copolymerizable monomer, such as FAVE, CTFE, HFP, propylene, ethylene, etc. in a proportion in such a range as not to deteriorate the desired properties of the resulting blend of fluorine-containing copolymers, generally not more than about 30% by mole.

Introduction into the VdF-TFE copolymer of peroxide-cross-linkable reaction sites can be carried out in the presence of at least one of the aforementioned iodine- and bromine-containing compound, the aforementioned iodine-containing compound, and the aforementioned bromine-containing compound, preferably unsaturated iodine- and/or bromine-containing compound, and saturated iodine- and/or bromine-containing compound in the reaction system for polymerization reaction to produce the VdF-TFE copolymer.

It is preferable that the polymerization reaction to produce the VdF-TFE copolymer is carried out by emulsion polymerization in the same manner as in the case of the fluorine-containing elastomer copolymer. As to the molecular weight of the resulting VdF-TFE copolymer, an intrinsic viscosity [*η*] as an index of molecular weight is about 0.5dl/g or more, preferably about 0.8dl/g or more. Below about 0.5dl/g, the improving effect on the strength of cross-linked moldings of a blend of fluorine-containing copolymers is not remarkable.

As will be described below, it is preferable to make a blend of fluorine-containing copolymers by the so called aqueous emulsion blending, i.e. by mixing an aqueous latex of fluorine-containing elastomer with an aqueous emulsion of VdF-TFE copolymer.

The fluorine-containing elastomer copolymer and the VdF-TFE copolymer are blended together in a proportion of the former of 95 to 55% by weight, preferably 90 to 60% and the latter of 5 to 45% by weight, preferably 10 to 40% by weight. When the blending proportion of VdF-TFE copolymer is less than about 5% by weight, the improving effect of the fluorine-containing elastomer copolymer on the normal state physical properties is not remarkable, and the improving effect on the plasma resistance is not remarkable, either. A blending proportion of more than 45% by weight, on the other hand, lowers not only the kneadability at the blending, but also the compression set characteristics. Furthermore, it is preferable that the blend of fluorine-containing copolymers has a F content of not more than 72% by weight. When the F content is more than 72% by weight, dispersion of a cocross-linking agent will be poor, so it will be difficult to obtain a uniform blend.

The blend can be made by mixing and kneading the fluorine-containing elastomer copolymer and the VdF-TFE copolymer, each being isolated into a solid state, through mixing rolls, a kneader, a Banbury mixer, etc., but by the afore-mentioned aqueous emulsion blending method, which comprises blending an aqueous latex of fluorine-containing elastomer copolymer with an aqueous emulsion of VdF-TFE copolymer, both of which are obtained by emulsion polymerization, in a blending proportion of desired solid matters to obtain an aqueous emulsion, followed by coagulation, washing, and drying, more advantages can be attained, such as (a) one run each of coagulation, washing, and drying can be satisfactory, (b) kneading time can be shorter, and (c) dispersibility of fluorine-containing elastomer copolymer in VdF-TFE copolymer can be improved. Coagulation of the aqueous emulsion can be carried out by drop wise addion of the aqueous emulsion to an aqueous solution of a salt such as calcium chloride, sodium chloride, potassium alum, etc., or to a water-soluble alcohol-based organic solvent such as methanol, ethanol, etc., or to a ketone-based organic solvent such as acetone, methyl ethyl ketone, methyl isobutyl ketone, etc. To much reduce the amount of impurities contained in the blend of fluorine-containing copolymers, freeze-coagulation, or coagulation using a water-soluble organic solvent, or coagulation using a cationic surfactant is preferable.
Patent Literature 4 : JP-A-2004-285264

When the fluorine-containing elastomer copolymer and the VdF-TFE copolymer each contain about 0.005 to about 0:050millimoles/g polymer, preferably about 0.01 to about 0.04millimoles/g polymer, of iodine groups as introduced therein, or about 0.005 to about 0.050millimoles/g polymer, preferably about 0.01 to about 0.04millimoles/g polymer, of the bromine groups as introduced therein together with the above-mentioned proportion of the iodine groups, an organic peroxide is used as a cross-linking agent. The bromine groups to be cross-linked by an organic peroxide can be introduced into the polymers in a proportion of about 0.015 to about 0.035millimoles/g polymer, preferably about 0.02 to about 0.03millimoles/g polymer.

The organic peroxide for use herein includes, for example, 2,-5-dimethyl-2,5-bis(t-butylperoxy)hexane, 2,5-dimethyl-2,5-bis(t-butylperoxy)hexine-3, benzoyl peroxide, 2,4-dichlorobenzoyl peroxide, p-chlorobenzoyl peroxide, t-butyl perbenzoate, bis(2,4-dichlorobenzoyl) peroxide, dicumyl peroxide, di-t-butyl peroxide, t-butylcumyl peroxide, t-butylperoxybenzene, 1,1-bis(t-butylperoxy)-3,5,5-trimethylcyclohexane, 2,5-dimethylhexane-2,5-dihydroxyperoxide, α, α' -bis(t-butylperoxy)-p-diisopropylbenzene, 2,5-dimethyl-2,5-di(benzoylperoxy)hexane, and t-butylperoxyisopropyl carbonate, and preferably from the viewpoints of half-life time and cross-linking temperature 2,5-dimethyl-2,5-di(t-butylperoxy)hexane is used.

Together with the organic peroxide, a cocross-linking agent of polyfunctional unsaturated compound can be used, if required, and includes, for example, tri(meth)allyl isocyanurate, tri(meth)allyl cyanurate, triallyl trimellitate, N,N' -m-phenylene bismaleimide, diallyl phthalate, tris(diallylamine)-s-triazine, triallyl phosphite, 1,2-polybutadiene, ethyleneglycol di(meth)acrylate, diethyleneglycol di(meth)acrylate, 1,3-butyleneglycol di(meth)acrylate, 1,4-butyleneglycol di(meth)acrylate, 1,6-hexanediol di(meth)acrylate, polyethyleneglycol di(meth)acrylate, trimethylolpropane tri(meth)acrylate, pentaerythritol tri(meth)acrylate, 3-chloro-2-hydroxypropane methacrylate, oligoester (meth)acrylate, diallyl chlorendate, divinyl benzene, etc., and preferably from the viewpoint of compatibility with the blend of fluorine-containing copolymers triallyl isocyanurate, triallyl cyanurate, and triallyl trimellitate are used.

Among the foregoing components used in the peroxide cross-linking system, about 0.01 to about 10 parts by weight, preferably about 0.5 to about 5 parts by weight, of an organic peroxide, and about 0.1 to about 20 parts by weight, preferably about 1 to about 15 parts by weight, of a cocross-linking agent can be used on the basis of 100 parts by weight of the blend of fluorine-containing copolymers.

The foregoing individual components are kneaded through mixing rolls, a kneader, a Banbury mixer, etc. to prepare a cross-linkable composition. It is preferable not to add an inorganic filler in a cross-linkable composition, which is a cause for the particle generation. The cross-linkable composition so prepared is subjected to cross-linking molding in a press molding machine by heating at about 100° to about 250°C for about 1 to about 60 minutes, and further, if required, to second cross-linking by heating at about 100° to about 250°C for about 1 to about 50 hours.

The resulting cross-linked fluorine-containing copolymer moldings can be applied to a plasma irradiation step. Plasma irradiation involves such a case that the cross-linked fluorine-containing copolymer moldings itself is a targent of plasma irradiation treatment and also such a case that the moldings are used as a sealing material or rolls for conveyance in the semiconductor or liquid crystal production apparatuses, while other parts are subjected to plasma irradiation treatment in the production process, and consequently the sealing material and rolls for conveyance are inevitably subjected to the plasma irradiation treatment, where the cross-linked fluorine-containing copolymer moldings is plasma treated with, for example, perfluoroalkanes such as CF₄, C₂F₆, etc., an oxygen gas, or an oxygen-containing compound gas such as carbon oxide, nitrogen oxide, etc., a nitrogen-containing compound such as ammonia, volatile amine compound, etc., and unsaturated or saturated chlorinated hydrocarbons such as vinyl chloride, vinylidene chloride, trichloroethylene, tetrachloroethylene, dichloroethane, trichloroethane, etc.

Plasma treatment in the gaseous atmosphere can be carried out by placing a cross-linked fluorine-containing copolymer moldings into a tubular plasma reaction chamber connected to a vacuum pump, a leak valve, and a main valve, and provided with a vacuum gage, adjusting the inside pressure of the reaction chamber to a vacuum of about 0.01Torr or more, then opening the main valve to introduce a mixed gas into the reaction chamber until the pressure reaches about 0.02 to about 1Torr, thereby filling the mixed gas in the reaction chamber, and conducting plasma irradiation from an oscillation coil wound around the cylinder in a small diameter provided at the edge of the reaction chamber under such conditions as an effective power of about 10 to about 300W for a glow discharge time of about 1 to about 60 minutes, using a high-frequency power source comprising a high-frequency generator (13.56MHz) and a matching unit. As a reaction chamber a bell jar type, etc. can be also used besides the above-mentioned tubular type. As the discharge electrodes, external or internal parallel electrode plates can be also used besides the above-mentioned coil type.

### EXAMPLES

The present invention will be described in detail below, referring to Examples.

### REFERENCE EXAMPLE 1

The following components were charged into a SUS316 autoclave having a net capacity of 100L, provided with a stirrer :

| | |
|---|---|
| Deionized water | 60kg |
| Ammonium perfluorooctanoate | 720g |
| Aqueous 25wt.% ammonia solution | 28g |
| Ammonium persulfate | 8g |
| Sodium hydrogen sulfite | 1g |

The autoclave was thoroughly degassified. Then, the following compound was charged therein :

| | |
|---|---|
| BrCF₂CF₂I [IBrTFE] | 93g |

Then, the autoclave was heated to 80°C, and after maintaining the temperature at 80°C for 30 minutes, the following monomers were charged therein :

| | |
|---|---|
| Vinylidene fluoride [VdF] | 3.45kg(65.5mol.%) |
| Tetrafluoroethylene [TFE] | 0.95kg(11.6mol.%) |
| Perfluoro(methyl vinyl ether) [FMVE] | 3.10kg(22.7mol.%) |
| CF₂=CFOCF₂CF₂Br [FBrVE] | 50g(0.2mol.%) |

Polymerization reaction of the charged monomers was initiated by setting the inner pressure of the autoclave to 3.0MPa · G. When the inner pressure of the autoclave was lowered to 2.9MPa · G as a result of progress of polymerization reaction, a monomer mixture of uniform composition ratio of VdF/TFE/FMVE/FBrVE=68/12/19/1(mol.%) was portion wise added thereto to continue the operation of adjusting the internal pressure fluctuating between 2.9 and 3.0MPa · G until total amount of portion wise added monomers reached 24kg, and then aging was conducted until the inner pressure reached to 0.5MPa · G, thereby completing the polymerization reaction.

The aqueous latex of fluorine-containing elastomer discharged from the autoclave had a solid matter concentration of 33% by weight, and a portion of the aqueous latex was subjected to coagulation by an aqueous 1wt.% calcium chloride solution, separation by filtration, and washing with deionized water to recover polymerizate, followed by drying, whereby white, powdery fluorine-containing elastomer copolymer A was obtained.

The fluorine-containing elastomer copolymer A thus obtained was subjected to determination of the following items :
Determination of composition ratio : By ¹⁹F-NMR and IR
Determination of glass transition point : Glass transition point Tg was determined by Model DSC220C, made by Seiko Instrument Co., according to a temperature program of heating a sample from -100°C to 100°C at a temperature elevation rate of 10°C/min., then cooling it to - 100°C at a cooling rate of 10°C/min., and again elevating the temperature to 100°C at a temperature elevation rate of 10°C/min
Determination of Intrinsic viscosity : By preparing solutions of fluorine-containing elatomer copolymer in acetone (Solvent A) or FC-77 (Solvent B) at concentrations of 2g/L, 4g/L, and 10g/L, respectively, intrinsic viscosity was determined from intercepts of falling time and concentration at 35°C, using an Ube-Rhode viscosimeter
Melt viscosity : The copolymer was placed in a cylinder, 9.5mm in inner diameter, kept at a predetermined temperature for 5 minutes and extruded through an orifice, 2.095mm in inner diameter and 8.00mm in length, under a load of 5kg to measure the extruded weight, using a melt indexer, made by Toyo Seiki Mfg. Co.
Mooney viscosity : Mooney viscosity of a sample was measured at 121°C, using a Mooney viscosimeter Model SMV-201, made by Shimadzu Corp.

### REFERENCE EXAMPLES 2 TO 8

Fluorine-containing elastomer copolymers B-E and fluorine-containing resin copolymers F-H were papared in the same manner as in Reference Example 1, and were subjected to determination of the same items (where as to the fluorine-containing resin copolymers determination of not Tg, but melting point was conducted).
Determination of melting point : By Model DSC220C, made by Seiko Instrument Co., according to a temperature program of heating a sample from 30° to 250°C at a temperature elevation rate of 10°C/min., then cooling it to 30°C at a cooling rate of 10°C/min., and again elevating the temperature to 250°C at a temperature elevation rate of 10° /min., where the endothermic peak apex temperature was made as a melting point

The results of determination in the foregoing Reference Examples are shown in the following Table 1.

**Table 1**

| Ref. Ex. No. | | 1 | 2 | 3 | 4 | 5 | 6 | 7 | 8 |
|---|---|---|---|---|---|---|---|---|---|
| Fluorine-containing copolymer | | A | B | C | D | E | F | G | H |
| Copolymer composition | | | | | | | | | |
| VdF | (mol.%) | 70 | 29 | 14 | 64 | - | 80 | 49 | 10 |
| TFE | (mol.%) | 12 | 40 | 52 | 15 | 64 | 20 | 50 | 90 |
| FMVE | (mol.%) | 17 | 30 | 33 | - | 35 | - | - | - |
| HFP | (mol.%) | - | - | - | 20 | - | - | - | - |
| FBrVE | (mol.%) | 1 | 1 | 1 | 1 | 1 | - | 1 | - |
| Physical properties | | | | | | | | | |
| Tg | (°C) | -30 | -16 | -11 | -18 | -5 | - | - | - |
| Melting point | (°C) | - | - | - | - | - | 128 | 213 | 280 |
| Intrinsic viscosity | (dl/g) | 1.11 | 0.50 | 0.34 | 1.37 | 0.40 | 1.36 | 0.40 | - |
| Solvent used | | A | B | B | A | B | A | B | insoluble |
| Melt viscosity | (g/10min.) | 5 | 3 | 70 | 50 | 32 | 1 | 20 | 0 |
| Measurement temp. | (°C) | 260 | 210 | 180 | 180 | 180 | 280 | 280 | 280 |
| Mooney viscosity | (-) | 59 | 81 | 17 | 69 | 46 | - | - | - |

### EXAMPLES 1 TO 6 AND COMPARATIVE EXAMPLES 1 TO 5

Aqueous latexes of fluorine-containing elastomer copolymers A-E obtained in Reference Examples 1 to 5, and aqueous emulsions of fluorine-containing resin copolymers F-H obtained in Reference Examples F-H were mixed together with thorough stirring in percent solid matter weight proportions as shown in the following Table 2, and the resulting mixed aqueous emulsions were subjected to coagulation with an aqueous 1wt.% calcium chloride solution, separation by filtration, and washing with deionized water to recover individual mixed copolymers. By drying, individual blends I-XI of the fluorine-containing copolymers were obtained.

**Table 2**

| Blend | F content | Fluorine-containing elastomer copolymer | | Fluorine-containing resin copolymer | |
|---|---|---|---|---|---|
| | (wt.%) | species | wt.% | species | wt.% |
| I | 64.23 | A | 85 | F | 15 |
| II | 64.21 | A | 73 | F | 27 |
| III | 68.23 | B | 80 | F | 20 |
| IV | 71.28 | B | 80 | H | 20 |
| V | 70.49 | C | 78 | G | 22 |
| VI | 71.79 | C | 83 | H | 17 |
| VII | 64.27 | A | 100 | - | - |
| VIII | 69.27 | B | 100 | - | - |
| IX | 70.74 | C | 100 | - | - |
| X | 67.42 | D | 100 | - | - |
| XI | 72.01 | E | 100 | - | - |

Blends I-XI were subjected to Mooney viscosity determination in the same manner as mentioned before, and then admixed with predetermined amounts of a triallyl isocyanurate cocross-linking agent and a 2,5-dimethyl-2,5-di(t-butylperoxy)hexane cross-linking agent, followed by kneading through rolls. The individual kneaded cross-linkable compositions were subjected to primary vulcanization at 180 °C for 6 minutes and to secondary vulcanization at 175°C for 15 hours, whereby sheets and O-rings were obtained by cross-linking molding.

The individual cross-linkable compositions were subjected to determination or evaluation of kneadability (roll processability and cross-linking moldability), and the individual cross-linked moldings were also subjected to determination or evaluation of normal state physical properties (hardness test and tensile test), compression set value, and plasma resistance.
Roll processability : Evaluation of roll processability was made by an 8-inch roll mill, where good windability was evaluated as " ○ " , occurrence of cracks at the edge of wound sheet as "Δ" , and poor windability as " × "
Cross-linking moldability : cross-linked moldings resulting from the primary vulcanization, which showed a good mold releasability and a smooth surface, were evaluated as "O" , those which had a relatively good mold releasability and a partially uneven surface as "Δ" , and those which completely failed to retain the original shape after the mold releasing as " × "
Hardness test : 2mm-thick cross-linked sheets prepared according to JIS K6250 were subjected to a hardness test by a Type A durometer hardness tester according to JIS K6253
Tensile test: 2mm-thick cross-linked sheets prepared according to JIS K6250 were subjected to blanking to obtain dumb-bell type No.6 test pieces, which were then subjected to determination of tensile strength, elongation at breaking, and 100% tensile stress at a stretching rate of 500mm/min. according to JIS K6251
Compression set test : Cross-linked O-rings were subjected to 25% compression strain in the height direction to measure a compression set value at 100°C, 175°C or 200°C for 70 hours according to JIS K6262
Plasma resistance test:
Apparatus : Dry etching apparatus, Model RBH-3030, made by ULVAC Co.
Plasma gas species : CF₄ or O₂
Chamber pressure : 0.1Pa
Gas flow rate : 20sccm
Rf power: 500W
Electrode height: 120mm
Irradiation time : Continuous irradiation for 6 hours
Evaluation : Evaluated as percent weight change and percent volume change by an automatic specific gravimeter

Results of the foregoing determination or evaluation are shown in the following Table 3, together with Mooney viscosities of the compositions and blending proportions of the cross-linkable compositions.

**Table 3**

| | | Example No. | | | | | | Comp. Ex. No. | | | | |
|---|---|---|---|---|---|---|---|---|---|---|---|---|
| | | 1 | 2 | 3 | 4 | 5 | 6 | 1 | 2 | 3 | 4 | 5 |
| [Composition] | | | | | | | | | | | | |
| Mooney viscosity (-) | | 60 | 76 | 119 | 73 | 178 | 150 | 59 | 81 | 17 | 69 | 46 |
| [Cross-linkable composition] | | | | | | | | | | | | |
| Blending | | | | | | | | | | | | |
| Blend specifies | | I | II | III | IV | V | VI | VII | VIII | IX | X | XI |
| Blend (parts by weight) | | 100 | 100 | 100 | 100 | 100 | 100 | 100 | 100 | 100 | 100 | 100 |
| Cocross-linking agent (parts by weight) | | 4.0 | 4.0 | 3.9 | 4.9 | 4.9 | 4.0 | 5.48 | 4.0 | 4.0 | 4.0 | 4.0 |
| Cross-linking agent (parts by weight) | | 2.4 | 0.6 | 0.8 | 1.0 | 1.0 | 0.8 | 0.82 | 0.8 | 0.8 | 2.0 | 0.6 |
| Kneadability | | | | | | | | | | | | |
| Roll processability | | ○ | ○ | ○ | ○ | ○ | ○ | ○ | Δ | × | ○ | × |
| Cross-linking moldability | | ○ | ○ | ○ | ○ | ○ | ○ | ○ | Δ | × | ○ | × |
| [Cross-linked moldings] | | | | | | | | | | | | |
| Normal state physical properties | | | | | | | | | | | | |
| Hardness | (Shore A) | 59 | 73 | 80 | 81 | 67 | 85 | 51 | 63 | 78 | 60 | - |
| 100% modulus | (MPa) | 1.5 | 3.8 | 4.0 | 1.8 | 0.7 | 4.3 | 1.2 | 1.9 | 5.8 | 1.2 | - |
| Tensile strength | (MPa) | 18.0 | 21.2 | 27.6 | 18.3 | 11.7 | 16.7 | 11.5 | 19.7 | 12.4 | 10.8 | - |
| Elongation | (%) | 400 | 410 | 310 | 190 | 370 | 340 | 390 | 410 | 220 | 210 | - |
| Compression set | | | | | | | | | | | | |
| 100°C for 70 hrs | (%) | - | - | 36 | - | - | - | - | - | - | - | - |
| 175°C for 70 hrs | (%) | 27 | 19 | 20 | 25 | 50 | 30 | 29 | 60 | 37 | 37 | - |
| 200°C for 70 hrs | (%) | - | - | - | - | - | - | - | 69 | 48 | - | - |
| Plasma resistance | | | | | | | | | | | | |
| CF₄ percent weight change | (%) | -10 | -8 | -5 | -6 | -6 | -7 | -15 | -14 | -14 | -19 | - |
| CF₄ percent volume change | (%) | -10 | -8 | -5 | -6 | -6 | -7 | -15 | -14 | -14 | -19 | - |
| O₂ percent weight change | (%) | -14 | -12 | -8 | -9 | -10 | -11 | -19 | -17 | -16 | -22 | - |
| O₂ percent volume change | (%) | -14 | -12 | -8 | -9 | -10 | -11 | -19 | -17 | -16 | -22 | - |

## Claims

1. Use of a peroxide cross-linking product of a fluorine-containing copolymer blend comprising a fluorine-containing elastomer copolymer, and a fluorine-containing resin copolymer, which is a vinylidene fluoride-tetrafluoroethylene copolymer, wherein the fluorine-containing elastomer copolymer is a vinylidene fluoride-tetrafluoroethylene-perfluoro(lower-alkyl) vinyl ether) terpolymer, wherein the fluorine-containing resin compolymer has a crystal melting point of 100°C or higher, wherein the fluorine-containing elastomer copolymer and the vinylidene fluoride-tetrafluoroethylene copolymer, each have iodine groups and/or bromine groups as reaction sites capable of reacting with a peroxide-based cross-linking agent, respectively, wherein the fluorine-containing copolymer blend comprises 95-55% by weight of the fluorine-containing elastomer copolymer and 5-45% by weight of the fluorine-containing resin copolymer in a plasma irradiation step.

2. The use according to claim 1, wherein the fluorine-containing elastomer copolymer and the vinylidene fluoride-tetrafluoroethylene copolymer, each have iodine groups and/or bromine group reaction sites derived from unsaturated iodine- and bromine-containing compounds or saturated iodine- and bromine-containing compounds.

3. The use according to claim 1, wherein the fluorine-containing copolymer blend has an F content of 72% by weight or less.

4. The use according to claim 1, wherein the fluorine-containing copolymer blend is a blend of an aqueous emulsion prepared by blending an aqueous latex of the fluorine-containing elastomer copolymer with an aqueous latex of the fluorine-containing resin copolymer in a predetermined blending proportion of solid matters, followed by coagulation.

5. The use according to claim 1, wherein the product is free of an inorganic filler.

6. The use of claim 1, wherein the peroxide cross-linking product is a sealing material.

7. The use of claim 1, wherein the peroxide cross-linking product is a roller for conveyance.

8. The use of claim 1, wherein the product is used in a semiconductor production apparatus or a liquid crystal production apparatus.

## Patentansprüche

1. Verwendung eines Peroxid-Vernetzungsprodukts einer fluorhaltigen Copolymermischung, umfassend ein fluorhaltiges Elastomercopolymer und ein fluorhaltiges Harzcopolymer, das ein Vinylidenfluorid-Tetrafluorethylen-Copolymer ist, wobei das fluorhaltige Elastomercopolymer ein Vinylidenfluorid-Tetrafluorethylen-Perfluor(niederalkyl)-vinylether-Terpolymer ist, wobei das fluorhaltige Harzcopolymer einen Kristallschmelzpunkt von 100°C oder höher hat, wobei das fluorhaltige Elastomercopolymer und das Vinylidenfluorid-Tetrafluorethylen-Copolymer jeweils Iodgruppen und/oder Bromgruppen als Reaktionsstellen haben, die fähig sind, mit einem Vernetzungsmittel auf Peroxidbasis zu reagieren, wobei die fluorhaltige Copolymermischung 95-55 Gew.-% des fluorhaltigen Elastomercopolymers und 5-45 Gew.-% des fluorhaltigen Harzcopolymers umfasst, in einem Plasmabestrahlungsschritt.

2. Verwendung gemäß Anspruch 1, wobei das fluorhaltige Elastomercopolymer und das Vinylidenfluorid-Tetrafluorethylen-Copolymer jeweils Iodgruppen- und/oder Bromgruppen-Reaktionsstellen haben, die von ungesättigten Iod- und Brom-enthaltenden Verbindungen oder gesättigten Iod- und Brom-enthaltenden Verbindungen stammen.

3. Verwendung gemäß Anspruch 1, wobei die fluorhaltige Copolymermischung einen F-Gehalt von 72 Gew.-% oder weniger hat.

4. Verwendung gemäß Anspruch 1, wobei die fluorhaltige Copolymermischung eine Mischung einer wässrigen Emulsion ist, die durch Mischen eines wässrigen Latex des fluorhaltigen Elastomercopolymers mit einem wässrigen Latex des fluorhaltigen Harzcopolymers in einem vorbestimmten Mischungsverhältnis der Feststoffe, gefolgt von Koagulation, hergestellt wurde.

5. Verwendung gemäß Anspruch 1, wobei das Produkt von einem anorganischen Füllstoff frei ist.

6. Verwendung gemäß Anspruch 1, wobei das Peroxid-Vernetzungsprodukt ein Dichtungsmaterial ist.

7. Verwendung gemäß Anspruch 1, wobei das Peroxid-Vernetzungsprodukt eine Walze zum Transport ist.

8. Verwendung gemäß Anspruch 1, wobei das Produkt in einer Halbleiterproduktionsvorrichtung oder einer Flüssigkristallproduktionsvorrichtung eingesetzt wird.

## Revendications

1. Utilisation d'un produit de réticulation peroxyde d'un mélange de copolymères fluorés comprenant un élastomère de copolymère fluoré et une résine de copolymère fluoré, qui est un copolymère de tétrafluoroéthylène et de fluorure de vinylidène, dans lequel l'élastomère de copolymère fluoré est un terpolymère fluorure de vinylidène/tetrafluoroéthylène/perfluoro (alkyle inférieur vinyl)éther, dans lequel la résine de copolymère fluoré a un point de fusion du cristal d'au moins 100°C, dans lequel l'élastomère de copolymère et le copolymère de tétrafluoroéthylène et de fluorure de vinylidène ont chacun des groupes d'iode et/ou des groupes de brome comme sites réactifs, capable de réagir avec un agent réticulant à base de peroxyde, le mélange de copolymères fluorés comprenant 95-55% en poids d'un élastomère de copolymère fluoré et 5-45% en poids d'une résine de copolymère fluoré, dans une étape de l'irridation plasma.

2. Utilisation selon la revendication 1, dans laquelle l'élastomère de copolymère fluoré et le copolymère de tétrafluoroéthylène et de fluorure de vinylidène ont chacun des groupes d'iode et/ou des groupes de brome comme sites réactifs qui sont dérivés des composés insaturés contenant de l'iode et des composés insaturés contenant du brome ou des composés saturés contenant de l'iode et des composés saturés contenant du brome.

3. Utilisation selon la revendication 1, dans laquelle le mélange du copolymère fluoré a une teneur en fluorure inférieure ou égale à 72 % en poids.

4. Utilisation selon la revendication 1, dans laquelle le mélange de copolymère fluoré est un mélange d'une émulsion aqueuse préparée en mélangeant un latex aqueux de l'élastomère de copolymère fluoré avec un latex aqueux de la résine de copolymère fluoré dans un rapport de mélange prédéterminé des substances solides, suivi d'une coagulation.

5. Utilisation selon la revendication 1, dans laquelle le produit ne contient pas une charge inorganique.

6. Utilisation selon la revendication 1, dans laquelle le produit de réticulation peroxyde est un matériau d'étanchéité.

7. Utilisation selon la revendication 1, dans laquelle le produit de réticulation peroxyde est un cylindre alimentateur.

8. Utilisation selon la revendication 1, dans laquelle le produit est utilisé dans un appareil pour la production des semi-conducteurs ou dans un appareil pour la production des cristaux liquides.
